(19) Europäisches Patentamt
European Patent Office
Office européen des brevets

(11) Veröffentlichungsnummer: **0 324 887 B1**

(12) **EUROPÄISCHE PATENTSCHRIFT**

(45) Veröffentlichungstag der Patentschrift: **05.05.93**

(51) Int. Cl.$^5$: **C09K 7/00**, E21B 31/03

(21) Anmeldenummer: **88103865.7**

(22) Anmeldetag: **11.03.88**

# (54) Zusammensetzungen zur Befreiung festgesetzter Bohrgestänge.

(30) Priorität: **20.01.88 DE 3801476**

(43) Veröffentlichungstag der Anmeldung:
**26.07.89 Patentblatt 89/30**

(45) Bekanntmachung des Hinweises auf die Patenterteilung:
**05.05.93 Patentblatt 93/18**

(84) Benannte Vertragsstaaten:
**DE FR GB IT NL**

(56) Entgegenhaltungen:
**EP-A- 0 200 466**
**DE-A- 3 124 393**
**US-A- 3 791 975**
**DE-A- 2 302 918**
**GB-A- 2 084 632**
**US-A- 4 631 136**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Müller, Heinz**
**Goldregenweg 4**
**W-4019 Monheim 2(DE)**
Erfinder: **Herold, Claus-Peter, Dr.**
**Ostpreussenstrasse 26**
**W-4020 Mettmann(DE)**
Erfinder: **von Tapavicza, Stephan, Dr.**
**Thomas Mann-Strasse 12**
**W-4006 Erkrath(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 324 887 B1

**Beschreibung**

Die Erfindung betrifft mineralölfreie Zusammensetzungen zur Befreiung festgesetzter Bohrgestänge.

Beim Bohren nach Erdöl oder Erdgas wird dem Bohrloch durch das Bohrgestänge hindurch üblicherweise eine Bohrspülung zugeführt. Diese hat nicht nur die Aufgabe, das Bohrgestänge zu kühlen und zu schmieren, sondern auch einen Druck auf die das Bohrloch umgebenden Formationen auszuüben und damit den mechanischen Druck der Formation auf das Bohrloch auszugleichen. Außerdem sind derartige Bohrspülungen so verdickt, daß sie in der Lage sind, das Bohrklein durch den das Bohrgestänge umgebenden ringförmigen Bohrraum auszutragen.

Üblicherweise wird das spezifische Gewicht einer Bohrspülung so eingestellt, daß der Druck der Gesteinsformationen auf das Bohrloch übertroffen wird. Dadurch werden flüssige Komponenten der Bohrspülung in die das Bohrloch umgebenden Formationen gepreßt, während sich unlösliche Komponenten an den Bohrloch-Wänden in Form eines stabilisierenden sogenannten "Filterkuchens" absetzen.

Insbesondere bei Bohrungen in größeren Tiefen läßt es sich nicht immer vermeiden, daß der Gang des Bohrgestänges (und damit auch das Bohrloch) Abweichungen von der Senkrechten aufweist. Dies bedeutet, daß das rotierende Bohrgestänge bei einem solchen "Knick" mit dem oben beschriebenen "Filterkuchen" bzw. später mit der Bohrlochwand in Kontakt kommt und sich sukzessive in diese eingräbt. Dies passiert insbesondere dann, wenn die Verbindungsstücke, die einen etwas größeren Durchmesser als das eigentliche Bohrgestänge aufweisen, mit den Versetzungen in Kontakt kommen. Die häufigste Ursache für das Festwerden des Bohrstranges ist das differentielle Festwerden. Differentielles Festwerden kann immer dann auftreten, wenn die Rotation des Bohrgestänges angehalten wird. Kommt das Bohrgestänge dann in Kontakt mit dem an der Bohrlochwand haftenden Filterkuchen, so wird es durch den hydrostatischen Druck der Spülungsäule in diesen eingedrückt. Die Kontaktfläche ist nun vom Spülungsdruck isoliert. Wenn der Spülungsdruck – wie normalerweise üblich – größer ist als der Formationsdruck, wird die Kontaktfläche an der Wand festgesaugt. Die Saugkraft erhöht sich mit der Dicke und Kompressibilität des Filterkuchens. Bei längerer Zeitdauer können auch größere Teile des Gestänges festgesaugt werden. Eine schnelle Behandlung ist deshalb erforderlich.

Die schnelle Befreiung des festsitzenden Bohrgestänges ist auch wegen des Zeitverlustes beim Bohren und der damit verbundenen immensen Kosten notwendig.

Zur Befreiung des festsitzenden Bohrgestänges hat sich in der Praxis als günstige Methode der Einsatz bestimmter Zusammensetzungen bewährt, die im Fachjargon üblicherweise als "Spotting-Fluids" bezeichnet werden. Derartige Spotting-Fluids müssen eine gute Schmierwirkung aufweisen und für eine gute Ölbenetzbarkeit dar Oberflächen sorgen. Dabei sind in diesem Zusammenhang nicht nur die Oberflächen des Bohrgestänges gemeint, sondern auch die mit dem Bohrgestänge in Kontakt kommenden Bohrlochwände bzw. der durch die Bohrspülung gebildete Filterkuchen.

Um effektiv zu sein, d.h. das Bohrgestänge wieder freizusetzen, muß ein Spotting-Fluid möglichst exakt an die Stelle im Bohrloch gebracht werden, an der das Bohrgestänge festsitzt. Dies geschieht auf demselben Wege, auf dem auch die Bohrspülung in das Bohrloch eingetragen wird. Das Spotting-Fluid wird anstelle der Bohrspülung durch das Innere des Bohrgestänges zum Bohrmeißel gepreßt, verläßt diesen und steigt im Bohrloch langsam bis zu der Stelle, an der die Störung lokalisiert ist. Es ist daher von entscheidender Wichtigkeit, daß das Spotting-Fluid in seinem spezifischen Gewicht möglichst genau auf das spezifische Gewicht der vorher verwendeten Bohrspülung eingestellt werden kann. Nur so ist es möglich, eine derartige, die Schmierwirkung erhöhende Zusammensetzung zur Befreiung festgesetzter Bohrgestänge über einen längeren Zeitraum an der Stelle im Bohrloch zu halten, die die Störung verursacht, damit das Fluid ausreichend Zeit zur Einwirkung hat.

Da aus den oben ausgeführten Gründen der schnelle Einsatz einer Spotting-Fluid von großer Wichtigkeit ist, werden auf der Bohrstelle üblicherweise Konzentrate gelagert, die durch Zugabe von Baryt oder anderen Beschwerungsmaterialien sowie ggf. weiteren Additiven und Wasser schnell auf die gewünschte Dichte und Konsistenz eingestellt werden können. Dies erspart Kosten und unnötige Stillstandszeiten.

Aus dem Stand der Technik sind derartige Zusammensetzungen zur Befreiung festgesetzter Bohrgestänge (Spotting-Fluids) bekannt. Sie sind üblicherweise auf der Basis von Kohlenwasserstoffgemischen, meistens auf der Basis von Dieselölen, aufgebaut. In neuerer Zeit werden auch als Hauptbestandteil derartiger Fluids aromatenarme Mineralöle verwendet. Den Zusammensetzungen sind dann üblicherweise Emulgatoren und Tenside beigemischt. Derartige, auf Basis Dieselöl bzw. Paraffinöl komponierte Zusammensetzungen werden beispielsweise in der EP-A- 200 466, US-A-4 427 564 und EP-A-0 063 471 beschrieben.

Diese wie auch andere aus dem Stand der Technik bekannte Zusammensetzungen weisen jedoch wesentliche Nachteile auf. Sowohl bei der Einwirkung der Zusammensetzungen am Anwendungsort wie auch beim Austrag nach erfolgtem Lösen des Bohrgestänges kommen derartige Zusammensetzungen mit den Bodenformationen bzw. der Erdoberfläche in Kontakt, dringen in das Erdreich ein und können dabei langfristige und schwer zu beseitigende Schäden anrichten. Zudem muß das auf Ölbasis zusammengesetzte Spotting-Fluid, das sich beim Austrag aus dem Bohrloch mit der wasserbasischen Bohrspülung vermischt, getrennt von der großen Menge der verbleibenden wasserbasischen Bohrspülung deponiert und aufgearbeitet werden, um die oben angesprochenen Umweltschädigungen zu vermeiden. Durch die Vermischung mit der Bohrspülung beim Austragen ist es erforderlich, daß auch eine bestimmte Menge der wasserbasischen Bohrspülung mit verworfen bzw. ebenfalls gesondert aufgearbeitet wird. Durch die Verluste an wasserbasischer Bohrspülung werden also zusätzliche Kosten verursacht. Ein weiterer Nachteil ist darin zu sehen, daß es sich beim Off-Shore-Bohren auf hoher See nicht vermeiden läßt, daß ein Teil der Bohrflüssigkeit, und damit auch ein Teil des mineralölhaltigen Spotting-Fluids, in das das Bohrloch umgebende Meerwasser gelangt und von diesem fortgeschwemmt wird. Die bekannte Folge ist, daß in der Nähe derartiger Bohranlagen Seetiere ungenießbar sind, da sie nach Dieselöl bzw. Mineralöl schmecken.

Ferner werden in der US-A-4,631,136 Bohrspülmittel beschrieben, die eine gute Schmierwirkung aufweisen und auch als Spotting-Fluid Verwendung finden können. Diese Bohrspülmittel bestehen aus Wasser-in-Öl-Emulsionen auf der Basis von nicht-toxischen, biologisch abbaubaren, natürlichen Ölen pflanzlichen oder tierischen Ursprungs. Als Additive enthalten diese Bohrspülmittel: Antioxidantien, beispielsweise spezielle Diamine oder Amine, alkylierte Phenole, Phosphitester oder alkylierte Phenol-sulfide, Synergisten für diese Antioxidantien, beispielsweise Citronensäure, Ascorbinsäure, Phosphorsäure oder Ester von Ascorbinsäure bzw. Fettsäuren, Emulgatoren, beispielsweise Sorbit-monooleat, Netzmittel auf Basis von Oleatestern, beispielsweise Polyoxyethylensorbit-monooleat, Verdickungsmittel, beispielsweise Amin-behandelter Bentonit, und Nasser, welches die üblichen Chloride enthalten kann.

Die DE-A-31 24 393 betrifft gleichfalls Spotting-Fluids auf der Basis von reinen, biologisch abbaubaren, nicht-fluoreszierenden, pflanzlichen Ölen oder Mineralölen. Diesen Ölen wird zur Verbesserung der rheologischen Eigenschaften ein Konzentrat zugesetzt, das aus einem Imidazolin/Amid-Gemisch, einem Diethanolamid und Tallöl-Fettsäure besteht, wobei diese Komponenten miteinander ein Salz bilden. Calciumoxid oder Bentonit können dem Konzentrat als Emulgiermittel zugesetzt werden.

Aufgabe der vorliegenden Erfindung war es demgegenüber, ein Spotting-Fluid zur Verfügung zu stellen, das auf einer umweltverträglichen Trägerflüssigkeit aufgebaut ist, die nicht nur Umweltunschädlich ist, sondern möglicherweise sogar gut biologisch abbaubar ist. Eine derartige Trägerflüssigkeit sollte zudem eine geringe oder gar keine Toxizität gegenüber Wasserorganismen zeigen. Eine weitere Aufgabe war, Zusammensetzungen zur Verfügung zu stellen, die eine gute Schmierwirkung zeigen und in der Lage sind, die Bohrgestänge-Oberflächen bzw. Gesteinsoberflächen und Filterkuchen-Oberflächen gut ölbenetzbar zu machen. Außerdem sollte sichergestellt sein, daß die Dichte mit den üblichen Beschwerungsmitteln auf die erforderlichen Werte schnell und problemlos am Anwendungsort eingestellt werden kann. Ein weiteres Erfordernis ist darin zu sehen, daß derartige Zusammensetzungen üblicherweise unter allen Temperaturbedingungen einsetzbar sein müssen. Dazu gehört vor allem, daß der Stockpunkt derartiger Zusammensetzungen, und damit insbesondere ihre Hauptkomponenten, auch bei Temperaturen von unter -10 °C noch nicht erreicht ist.

Die Erfindung betrifft mineralölfreie Zusammensetzungen zur Befreiung festgesetzter Bohrgestänge auf Basis von Fettsäureestern, Verdickungsmitteln, Emulgatoren und Wasser, welche dadurch gekennzeichnet sind, daß sie die folgenden Komponenten enthalten:

(a) 80 bis 95 Gew.-% mindestens eines Fettsäurealkylesters der allgemeinen Formel (I)

$$R^1 - \underset{\underset{O}{\parallel}}{C} - OR^2 \qquad (I)$$

in der

$R^1$ für einen geradkettigen Alkylrest, Alkenylrest oder Alkadienylrest mit 7 bis 23 C-Atomen und

$R^2$ für einen geradkettigen oder verzweigten Alkylrest mit 1 bis 8 C-Atomen stehen,

(b) 0,5 bis 5,0 Gew.-% mindestens eines organophilen, in oleophilen Systemen quellbaren Bentonits als Verdickungsmittel,

(c) 1 bis 10 Gew.-% eines aus Emulgatorkomponente und Co-Emulgatorkomponente bestehenden Emulgatorsystems, wobei als Emulgatorkomponente mindestens eine Verbindung aus der Gruppe Polyamine, Aminoamide, niedrig alkoxylierte Alkylphenole und Imidazoline und als Co-Emulgatorkomponente mindestens eine Verbindung aus der Gruppe Fettsäuren, deren Calciumsalze, Sulfonsäuren, deren Alkyl- oder Alkylbenzol-Derivate, deren Calciumsalze und Lecithin eingesetzt werden,

(d) 1 bis 5 Gew.-% Wasser und

(e) gegebenenfalls 1 bis 10 Gew.-% weitere, in derartigen Zusammensetzungen übliche Wirkstoffe und/oder Hilfsstoffe.

Diese Konzentrate können beliebig lang auf der Bohrstelle gelagert werden und bei Bedarf durch Zugabe von Beschwerungsmitteln und Wasser bzw. Elektrolytlösung sowie anderen Inhaltsstoffen schnell in eine einsatzfähige Zubereitung zur Befreiung festgesetzter Bohrgestänge überführt werden.

Als eine der essentiellen Komponenten enthalten die erfindungsgemäßen, mineralölfreien Zusammensetzungen zur Befreiung festgesetzter Bohrgestänge, die im olgenden als "Spotting-Fluids" bezeichnet werden, einen oder mehrere Fettsäurealkylester der allgemeinen Formel (I)

$$R^1-\underset{\underset{O}{\|}}{C}-OR^2 \qquad (I).$$

In dieser Formel steht $R^1$ für einen geradkettigen Alkylrest, Alkenylrest oder Alkadienylrest mit 7 bis 23 C-Atomen. In bevorzugten Ausführungsformen enthalten die erfindungsgemäßen Zusammensetzungen einen oder mehrere Fettsäurealkylester der allgemeinen Formel (I), in der $R^1$ für einen geradkettigen Alkylrest, Alkenylrest oder Alkadienylrest mit 11 bis 17 C-Atomen steht. Bevorzugt sind solche Ester, die eine oder zwei Doppelbindungen in der Kette des Restes $R^1$ enthalten. Dabei kann die Doppelbindung bzw. können die Doppelbindungen jede beliebige Position im Molekül einnehmen. Außerdem sind Ester mit ungesättigten Resten $R^1$ unabhängig davon geeignet, ob an den Doppelbindungen die Kette cis- oder trans-konfiguriert ist.

In einer besonders bevorzugten Ausführungsform der Erfindung enthalten die mineralölfreien Zusammensetzungen Mischungen von Fettsäurealkylestern der allgemeinen Formel (I), in der $R^1$ für jeweils unterschiedliche, geradkettige Alkylreste, Alkenylreste oder Alkadienylreste steht, die von natürlichen Fettsäuren mit 12 bis 18 C-Atomen abstammen, also beispielsweise Ester von Laurinsäure, Myristinsäure, Palmitinsäure, Stearinsäure, Lauroleinsäure, Myristoleinsäure, Palmitoleinsäure, Ölsäure, Linolsäure und/oder Linolensäure. Derartige, von natürlichen Fettsäuren abstammende Fettsäurealkylester können durch an sich bekannte fettchemische Synthesen in großem Maßstab aus natürlichen Fetten oder Ölen erhalten werden. Beispielsweise geeignet sind Reaktionen, in denen natürliche Fette oder Öle in Gegenwart von geeigneten Alkoholen bei erhöhter Temperatur umgeestert und damit gegebenenfalls unmittelbar in Fettsäurealkylester der allgemeinen Formel (I) überführt werden können. Es können aber auch Fettsäuren mit geeigneten Alkoholen verestert werden. Bei derartigen fettchemischen Synthesen entstehen üblicherweise keine definierten Einzelverbindungen, sondern in der Regel Mischungen von Fettsäurealkylestern, die entweder ohne weitere Reinigung in den erfindungsgemäßen, mineralölfreien Zusammensetzungen eingesetzt werden können oder üblichen, meist destillativen Reinigungs- und Trennungsgängen unterworfen werden und danach in Mischungen vorliegen, die ein mehr oder weniger enges Spektrum der Verteilung der C-Zahlen aufweisen. Als Ausgangsstoffe zur Herstellung der als Trägerflüssigkeit eingesetzten Ester sind natürliche Fette, beispielsweise Sonnenblumenöl, Sojaöl, Schweineschmalz, Kokosöl usw. geeignet. Es können aber auch die nach der Spaltung freigesetzten Fettsäuren verwendet werden. Gut geeignet ist auch Tallöl.

Die Fettsäurealkylester der allgemeinen Formel (I) eignen sich dann zur Verwendung in den erfindungsgemäßen mineralölfreien Zusammensetzungen, wenn sie an der mit $R^2$ bezeichneten Position einen geradkettigen oder verzweigten Alkylrest mit 1 bis 8 C-Atomen tragen. Als solche Reste kommen also die geradkettigen Reste aus der Gruppe Methyl, Ethyl, Propyl, Butyl, Pentyl, Hexyl, Heptyl und Octyl sowie deren verzweigtkettige Isomere in Frage.

In einer besonders bevorzugten Ausführungsform der Erfindung enthalten die mineralölfreien Zusammensetzungen einen oder mehrere Fettsäurealkylester der allgemeinen Formel (I), die einen Stockpunkt von -15 °C oder darunter haben. So weisen beispielsweise Ester der Ölsäure mit 2-Ethylhexanol oder Isobutanol Stockpunkte von -15 °C bis -35 °C auf. Die genannten Ester werden daher mit Vorteil verwendet. Bei Verwendung derartiger Ester (I) ist es in jedem Fall gewährleistet, daß auch bei extrem

niedrigen Temperaturen, wie sie z.T. bei Bohrungen in Kältegebieten auftreten können, die erfindungsgemäßen Zusammensetzungen nicht fest werden, sondern jederzeit in flüssiger oder leicht viskoser Form zur Verfügung stehen und schnell und mit nur geringem Aufwand zur Anwendung gebracht werden können.

Als weitere Komponente enthalten die mineralölfreien Zusammensetzungen gemäß der Erfindung als Verdickungsmittel organophile, in oleophilen Systemen quellbare Bentonite. Besonders bevorzugt sind dabei solche Bentonite, die mit quartären Ammoniumverbindungen beladen sind, oder in anderer geeigneter Weise hydrophobiert sind.

Eine weitere Komponente der erfindungsgemäßen Zusammensetzungen ist ein aus Emulgatorkomponente und Co-Emulgatorkomponente bestehendes Emulgatorsystem. In vorteilhafter Weise bewirken Emulgator und Co-Emulgator eine Emulgierung der Wassermengen, die in den Zusammensetzungen enthalten sind, in der Ölphase. Eine solche Emulgierung hat gleichzeitig eine Verdickung der gesamten Zusammensetzung zur Folge und bewirkt, daß die erfindungsgemäßen Zusammensetzungen ein gewisses Tragevermögen für Beschwerungsmittel und Bohrklein aufweisen. In bevorzugten Ausführungsformen liegen Emulgatorkomponenten und Co-Emulgatorkomponente im Gewichtsverhältnis 2 : 1 bis 3 : 1 vor. Es ist jedoch auch möglich, die Verhältnisse der beiden Komponenten zueinander auf Werte unterhalb oder oberhalb dieses Bereichs einzustellen, oder andere, nur aus einer Komponente bestehende Emulgatorsysteme einzusetzen.

Als Emulgatorkomponenten kommen eine oder mehrere Verbindungen aus der Gruppe Polyamine, Aminoamide, niedrig alkoxylierte, d.h. einen bis 20 Alkoxyreste (wie Ethoxyreste oder Propoxyreste) im Molekül sowie 1 bis 12 C-Atome im geradkettigen oder verzweigten Alkylrest enthaltende Alkylphenole, wie beispielsweise Additionsprodukte von Ethylenoxid und/oder Propylenoxid an Nonylphenol, und Imidazoline in Frage. Besonders bevorzugt sind Emulgatoren auf Aminoamid-Basis.

Als Co-Emulgatoren werden eine oder mehrere Verbindungen aus der Gruppe Fettsäuren, deren Calciumsalze, Sulfonsäuren, deren Alkyl- bzw. Alkylbenzolderivate, die 1 bis 8 C-Atome im geradkettigen oder verzweigten Alkylrest enthalten, deren Calciumsalze und Lecithin zum Einsatz gebracht. Mit besonderem Vorteil verwendete Emulgatorsysteme, die zu gut wirksamen Spotting-Fluids führen, bestehen aus einer Kombination aus Polyaminen und Fettsäuren oder deren Calciumsalzen. Dabei kann es möglich sein, daß die Co-Emulgatorkomponente (Calciumsalze der Fettsäure bzw. Fettsäuren) in situ aus Calciumhydroxid und der jeweiligen Fettsäure bzw. einer Mischung der Fettsäuren gebildet wird.

Außer den genannten Komponenten können in den Spotting-Fluids gemäß der Erfindung noch weitere, in derartigen Zusammensetzungen übliche Wirkstoffe und/oder Hilfsstoffe sowie Wasser enthalten sein.

Üblicherweise werden die erfindungsgemäßen Zusammensetzungen in Form von Konzentraten, die die oben näher definierten Komponenten in den angegebenen Mengen enthalten, konfektioniert, transportiert und auch gelagert. Dadurch wird vermieden, daß unnötigerweise verdünnte, größere Mengen Wasser enthaltende Lösungen oder Dispersionen transportiert bzw. gelagert werden müssen. Am Anwendungsort werden die erfindungsgemäßen Zusammensetzungen bei Bedarf jedoch mit mehr oder weniger großen Wassermengen versetzt. Entsprechend einer bevorzugten Ausführungsform der Erfindung enthalten solche Zusammensetzungen zur Anwendung Wasser in einer solchen Menge, daß der Gesamtgehalt der Esterkomponente, Bentonitkomponente und Emulgatorkomponente im Bereich von 70 bis 90 Gew.-% liegt, und der Wassergehalt derartiger Zusammensetzungen, die zur Anwendung verdünnt wurden, im Bereich von 10 bis 30 Gew.-% liegt, wobei beide Prozentangaben auf die Summe aller Komponenten bezogen sind.

Derartige, am Anwendungsort verdünnte Zusammensetzungen gemäß der Erfindung zeigen eine ausgezeichnete Schmierwirkung und sorgen dafür, daß sowohl die Oberflächen des Bohrgestänges als auch die Oberflächen des Bohrloches bzw. der auf das Bohrloch stabilisierenden "Filterkuchen" gut ölbenetzbar sind. Außerdem sind derartige Zusammensetzungen ohne Einschränkung umweltverträglich, da sie ausschließlich natürliche Komponenten oder solche Komponenten enthalten, die nicht in irgendeiner Weise toxisch auf die Umgebung wirken. Besonders die Trägerflüssigkeit, d.h. die Ester der allgemeinen Formel (I), wird problemlos zu umweltverträglichen Substanzen abgebaut und bewirkt weder Belastung der Gewässer und Gesteinsformationen noch eine Toxizität gegenüber Lebewesen, insbesondere Wasserlebewesen.

Darüberhinaus sind solche Zusammensetzungen problemlos mit aus dem Stand der Technik bekannten Beschwerungsmitteln zu versetzen. Als solche kommen üblicherweise Baryt oder auch Calciumcarbonat in Frage. Bei Einrühren derartiger Beschwerungsmittel läßt sich eine Dichte der erfindungsgemäßen Spotting-Fluids einstellen, die der erforderlichen Dichte der verwendeten Bohrspülung entspricht.

Nach Befreiung des Bohrgestänges können die erfindungsgemäßen Zusammensetzungen außerdem ohne Schwierigkeiten mit den auf Wasser basierenden Bohrspülungen gemischt werden. Es bedarf aufgrund der guten Umweltverträglichkeit der Zusammensetzungen keiner separaten Lagerung und Aufarbeitung der Zusammensetzungen. Vielmehr können diese in den Bohrspülungen verbleiben, ohne daß es

zu negativen Wechselwirkungen mit Komponenten der Bohrspülung selbst kommt. Überraschenderweise vermindern die in der Bohrspülung verbleibenden Reste der Spotting Fluid sogar die Reibung des Meißels und des Gestänges am Gestein erheblich. Diese Reibungsminderung ist sogar deutlich niedriger als durch gleiche Mengen Mineralöl. Durch Belassen der Reste der Spotting Fluid in der Spülung können also Kosten für den Einsatz von Schmiermitteln gespart werden.

Die Erfindung wird durch die nachfolgenden Beispiele näher erläutert.

Beispiel 1

Durch Zusammenmischen der in Tabelle 1 angegebenen Einzelkomponenten wurden Spotting-Fluid-Konzentrate hergestellt. Die Menge der jeweils eingesetzten Einzelkomponenten ist der nachfolgenden Tabelle 1 zu entnehmen.

Tabelle 1

| Zusammensetzung der Spotting-Fluid-Konzentrate | | | | | | |
|---|---|---|---|---|---|---|
| | Bestandteile | | Formulierung | | | |
| | | | I | II | III | IV |
| (a) | Ester (I), | $R^1 = C_{17}H_{33}$ $R^2 = i-C_4H_9$ (ml) | 239 | 239 | 239 | 239 |
| (b) | Bentonit[1)] (g) | | 6 | 6 | 6 | 6 |
| (c) | Emulgator[2)] (g) | | 9 | 9 | 9 | 9 |
| | Co-Emulgator[3)] (g) | | 3+8 | 6+8 | 3+8 | 6+8 |
| (d) | Wasser (ml) | | 4,9 | 4,9 | 7,2 | 7,2 |

Anmerkungen:
1) organophil, Handelsprodukt "Omnigel" der Fa. Hughes Corp.
2) auf Basis eines Umsetzungsproduktes eines Polyamins mit Fettsäure und Maleinsäureanhydrid
3) Stearinsäure + $Ca(OH)_2$

Die Spotting-Fluids der Formulierungen (I) bis (IV) sind problemlos lagerbar und können bei Bedarf durch Zugabe von Wasser und gegebenenfalls Einstellung der gewünschten Dichte mit Baryt unter Vermischen schnell zum Einsatz gebracht werden.

Beispiel 2

Es wurde die Lagerbeständigkeit der gemäß Beispiel 1 hergestellten Spotting-Fluid-Konzentrate getestet. Dazu wurden die rheologischen Daten mit einem Viskosimeter des Typs "Fann 35" bei 50 °C gemessen. Die Lagerung erfolgte bei 40 °C über 14 Tage.

Die Messung der Gelstärke erfolgte nach 10 sec bzw. 10 min.

Die Ergebnisse sind der nachfolgenden Tabelle 2 zu entnehmen.

Die Werte für die Fließgrenzen bzw. Gelstärken der einzelnen Formulierungen, die sich - bedingt durch das verwendete Viskosimeter - in der Dimension "lbs/100 ft$^2$" ergaben, wurden mit dem Umrechnungsfaktor 4,788 in "dPa.s" umgerechnet.

Tabelle 2

| Lagerbeständigkeit der erfindungsgemäßen Spotting – Fluid – Konzentrate | | | | |
|---|---|---|---|---|
| Formulierung[1)] | | Plastische Viskosität (mPa.s) | Fließgrenze (dPa) | Gelstärke (10 sec/10 min) (dPa) |
| I | (a) | 12 | 19,2 | 14,4/19,2 |
| | (b) | 15 | 33,5 | 23,9/33,5 |
| II | (a) | 7 | 86,2 | 38,3/43,1 |
| | (b) | 13 | 71,8 | 33,5/33,5 |
| III | (a) | 13 | 23,9 | 23,9/47,9 |
| | (b) | 14 | 43,1 | 33,5/47,9 |
| IV | (a) | 13 | 47,9 | 33,5/57,5 |
| | (b) | 15 | 67,0 | 57,5/47,9 |

Anmerkungen:
[1)] (a) = sofort nach Ansatz
(b) = nach Lagerung von 14 Tagen bei 40 ° C

Beispiel 3

Zur Prüfung der Stabilität des für die Anwendung fertigen, mit Wasser verdünnten Spotting – Fluids wurden den gemäß Beispiel 1 hergestellten Konzentraten solche Wassermengen zugesetzt, daß der Gesamtwassergehalt 30 % betrug. Die Stabilität wurde in der in Beispiel 2 beschriebenen Art und Weise erneut bestimmt. Auch dabei wurden die entsprechenden Bestimmungen sofort nach Ansatz der anwendungsfertigen Zusammensetzungen einerseits und nach Lagerung von 14 Tagen andererseits bestimmt. Die Lagerung erfolgte, wie auch in Beispiel 2, bei 40 ° C über 14 Tage.

Die Ergebnisse sind der nachfolgenden Tabelle 3 zu entnehmen.

Tabelle 3

| Lagerbeständigkeit der erfindungsgemäßen Spotting – Fluids nach Verdünnung mit 30 % $H_2O$ | | | | | |
|---|---|---|---|---|---|
| Formulierung[1)] | | Plastische Viskosität (mPa.s) | Fließgrenze (dPa) | Gelstärke (10 sec/10 min) (dPa) | Emulsionsstabilität (mV) |
| I | (a) | 21 | 62,2 | 43,1/119,7 | 1180 |
| | (b) | 17 | 57,5 | 76,6/119,7 | 1250 |
| II | (a) | 26 | 153,2 | 95,8/119,7 | 1220 |
| | (b) | 22 | 148,4 | 71,8/90,8 | 1460 |
| III | (a) | 24,5 | 81,4 | 57,5/123,9 | 1200 |
| | (b) | 24 | 100,5 | 71,8/95,8 | 960 |
| IV | (a) | 27 | 138,9 | 86,2/119,7 | 1280 |
| | (b) | 23 | 138,9 | 81,4/119,7 | 1280 |

Anmerkungen:
[1)] (a) = sofort nach Ansatz
(b) = nach Lagerung von 14 Tagen bei 40 ° C

Beispiel 4

Überraschenderweise wurde auch gefunden, daß die Schmierwirkung, die mit Zusammensetzungen gemäß der vorliegenden Erfindung bewirkt wird, deutlich die Schmierwirkung von Mineralöle enthaltenden Spotting-Fluids übertrifft. Dabei ist zu berücksichtigen, daß nach Befreiung festgesetzter Bohrgestänge die Zusammensetzungen gemäß der Erfindung in der Bohrspülung verbleiben, sich dies jedoch günstig auf deren Eigenschaften auswirkt. Bohrspülungen gemäß dem Stand der Technik konnten aufgrund ihrer schädigenden Auswirkungen auf die Umwelt üblicherweise nicht in den Bohrspülungen belassen werden, sondern mußten auszirkuliert und entsorgt werden.

Eine sehr praxisnahe Überprüfung der Schmiereigenschaften derartiger Bohrspülungen läßt sich in einem unter dem Namen "Lubricity-Tester" bekannten Gerät vornehmen. Mit diesem Gerät kann die Reibung von Gesteinskernen, die den Einfluß natürlicher Formationen auf das Metall imitieren sollen, gegen eine sich drehende Metallplatte gemessen werden. Dabei werden die der Reibung unterworfenen Flächen von Metall und Gesteinskern mit Bohrflüssigkeit umspült. Die Gesteinskerne werden mit einem Gewicht belastet und dadurch - je nach Gewicht unterschiedlich stark - gegen die rotierende Metallplatte angedrückt. Bei konstantem Antrieb der Metallplatte ergibt sich die Schmierwirkung der Bohrflüssigkeit aus dem auf die Gesteinsproben ausgeübten Drehmoment. Die Gesteinsproben sind auslenkbar gelagert, wobei der Auslenkung eine Federkraft entgegensteht. Die gemessene Auslenkung ist ein Maß für die Reibungsminderung.

Bei guter Schmierwirkung der Bohrflüssigkeit kommt es nur zu geringer Reibung; damit wird nur ein kleines Drehmoment gemessen. Bei schlechter Schmierwirkung ist der Wert für das Drehmoment mehr oder weniger groß.

Der sogenannte "Reibbeiwert $\mu$" wird aus den erhaltenen Meßwerten entsprechend der nachfolgenden Gleichung berechnet:

$$\mu = \frac{M}{h \cdot f}$$

In der Formel steht

- $\mu$ für den Reibbeiwert,
- M für das Drehmoment,
- h für die Länge des Hebelarms und
- f für die Andruckkraft.

Mit Hilfe des oben beschriebenen "Lubricity-Testers" wurde die Schmierwirkung von Bentonit-Wasser-Mischungen geprüft, deren Zusammensetzung in etwa praxisnahen Bobrspülungen entspricht. In den Spülungen wurde auf 1 l Leitungswasser (16 °d) jeweils 40 g Bentonit und 10 g des Esters (Erfindung) bzw. Mineralöls (Stand der Technik) verwendet. Die Ergebnisse der Messungen sowie die daraus erhaltenen Reibbeiwerte bei unterschiedlichen Umdrehungsgeschwindigkeiten der Metallscheibe und einer Belastung der Gesteinsproben von 660 N/$m^2$ sind der nachfolgenden Tabelle 4 zu entnehmen. Die Metallscheibe des Lubricity-Testers bestand aus Stahl; die Gesteinsproben bestanden aus Granit.

Tabelle 4

| Schmierwirkung von Fettsäureestern und Mineralölen in einer Bentonit-Wasser-Spülung | | | | |
|---|---|---|---|---|
| | Reibbeiwert ($\mu$) bei m/sec (Stahl gegen Granit) | | | |
| | 50 | 100 | 200 | 300 |
| ohne Zusätze | 0,25 | 0,15 | 0,1 | 0,05 |
| 1 % Isobutyloleat | 0,04 | 0,01 | < 0,01 | < 0,01 |
| 1 % Methyloleat | 0,09 | 0,05 | 0,04 | 0,03 |
| 1 % Mineralöl BP 83HF | 0,09 | 0,07 | 0,04 | 0,03 |

Beispiel 5

In einem weiteren Test wurde die Umweltverträglichkeit der Hauptkomponente – des Esters – der erfindungsgemäßen Spotting – Fluids (gemäß Beispiel 1) mit der eines aromatenarmen Mineralöls, das die Hauptkomponente schon bekannter Spotting – Fluids darstellt, verglichen. Dabei wurde die biologische Abbaubarkeit im sogenannten "geschlossenen Flaschentest" gemessen, der die üblichen Umwelt – Auflagen übererfüllt. Dabei zeigte sich, daß das als Hauptkomponente der erfindungsgemäßen Zusammensetzungen verwendete Isobutyloleat eine weit höhere biologische Abbaubarkeit als das zum Vergleich herangezogene aromatenarme Mineralöl (BP 83 – HF) zeigt.

Außerdem wurde die Fischtoxizität an Zebra – Barben gemessen. Der Test erfolgte über eine Zeitdauer von 96 h. Es wurde unter semistatischen Bedingungen gemäß ISO 7346/II gemessen. Die Angabe in der nachfolgenden Tabelle 5 entspricht der in der oben genannten Vorschrift vorgesehenen LCO entsprechend "Lethal Concentration 0", d.h. also der Konzentration an oleophiler Komponente, bei der keine der Zebra – Barben starb. Wie die Ergebnisse in der nachfolgenden Tabelle 5 zeigen, ist die entsprechende Konzentration deutlich höher, so daß eine nennenswerte Fischtoxizität der Hauptkomponente der erfindungsgemäßen Spotting – Fluids nicht nachgewiesen werden kann.

Außerdem wurde ein Bakterien – Hemmtest nach DIN 38412 durchgeführt, in dem "Pseudomonas putida" einem Sauerstoffzehrungstest unterworfen wurde. Die in der nachfolgenden Tabelle 5 aufgeführte Angabe entspricht der NOEC entsprechend "No Effect Concentration", also der Konzentration, bei der gerade eine Beeinflussung des Bakterienwachstums nicht beobachtet wird. Wie die Ergebnisse aus Tabelle 5 zeigen, liegt die entsprechende Konzentration für die Hauptkomponente der erfindungsgemäßen Zusammensetzungen um nahezu 1,5 Zehnerpotenzen höher als für das aromatenarme Mineralöl, das als Hauptkomponente von Spotting – Fluids aus dem Stand der Technik verwendet wird.

Tabelle 5

| Vergleich ausgewählter ökologischer Daten der Hauptkomponente von Spotting – Fluids (vgl. Text) | | |
|---|---|---|
| | Isobutyloleat (erf. – gem. Fluid) | Mineralöl[1] (Stand d. Techn.) |
| Biologische Abbaubarkeit (BOD/COD nach 30 Tagen) | 74 % | 59 % |
| Fischtoxizität (LCO) | 700 mg/l | 100 mg/l |
| Bakterienhemmung (NOEC) | 1000 mg/l | 30 mg/l |

Anmerkungen: [1] Mineralöl BP83 – HF;

Beispiel 6

In einem weiteren Test wurde die Neigung zum Festwerden durch Differenzdruck untersucht. Dazu wurde der sogenannte Differential – Sticking – Testerder Fa. NL Baroid benutzt.

Dieses Gerät besteht aus einer Filtrationszelle, mit der die Spotting Fluid unter Überdruck von ca. 33 bar filtriert wird, so daß sich ein Filterkuchen ausbildet. Dabei wird eine flache Platte auf den Filterkuchen gepreßt. Nach vollständiger Filtration (ca. 10 min) wird die angepreßte Platte mit Hilfe eines Hebelarms verdreht. Dabei wird das Drehmoment gemessen. Dieses Drehmoment ist ein Maß für die Neigung zum differentiellen Festwerden.

Bei den Versuchen wurde eine erfindungsgemäße Formulierung auf Esterbasis mit einer solchen auf Basis Mineralöl und geblasenem Asphalt verglichen, die nach dem Stand der Technik heute die besten Ergebnisse liefern.

Die Spotting – Fluid auf Basis Fettsäureester hatte die folgende Zusammensetzung:

| | |
|---|---|
| a. Konzentrat (ml) entsprechend Formulierung IV aus Beispiel 1 | 250 |
| b. Wasser (ml) | 100 |
| c. Baryt 8 | 220 |

Die Spotting – Fluid nach dem Stand der Technik hatte folgende Zusammensetzung

| | |
|---|---|
| a. Konzentrat* (ml) | 332 |
| b. Wasser (ml) | 18 |
| c. Baryt (8) | 200 |

* Black Magic LT, Fa. Hughes Drilling Fluid

Die Versuche in dem Differential-Sticking-Tester ergaben folgende Ergebnisse:

| | Drehmoment |
|---|---|
| Erfindungsgemäße Spotting-Fluid auf Fettbasis | 24 Nm |
| Spotting-Fluid auf Basis Mineralöl/geblasenem Asphalt | 68 Nm |

Der Versuch zeigt, daß die erfindungsgemäße Formulierung auf Esterbasis ein sehr viel niedrigeres Drehmoment hat, als die Formulierung nach dem Stand der Technik. Damit sind die Neigung zum Festwerden und die ablösende Wirkung auf schon festgewordenem Gestänge auch sehr viel größer.

**Patentansprüche**

**1.** Mineralölfreie Zusammensetzungen zur Befreiung festgesetzter Bohrgestänge auf Basis von Fettsäureestern, Verdickungsmitteln, Emulgatoren und Wasser, dadurch gekennzeichnet, daß sie die folgenden Komponenten enthalten:

(a) 80 bis 95 Gew.-% mindestens eines Fettsäurealkylesters der allgemeinen Formel (I)

$$R^1 - \underset{\underset{O}{\|}}{C} - OR^2 \qquad (I)$$

in der

$R^1$ für einen geradkettigen Alkylrest, Alkenylrest oder Alkadienylrest mit 7 bis 23 C-Atomen und

$R^2$ für einen geradkettigen oder verzweigten Alkylrest mit 1 bis 8 C-Atomen stehen,

(b) 0,5 bis 5,0 Gew.-% mindestens eines organophilen, in oleophilen Systemen quellbaren Bentonits als Verdickungsmittel,

(c) 1 bis 10 Gew.-% eines aus Emulgatorkomponente und Co-Emulgatorkomponente bestehenden Emulgatorsystems, wobei als Emulgatorkomponente mindestens eine Verbindung aus der Gruppe Polyamine, Aminoamide, niedrig alkoxylierte Alkylphenole und Imidazoline und als Co-Emulgatorkomponente mindestens eine Verbindung aus der Gruppe Fettsäuren, deren Calciumsalze, Sulfonsäuren, deren Alkyl- oder Alkylbenzol-Derivate, deren Calciumsalze und Lecithin eingesetzt werden,

(d) 1 bis 5 Gew.-% Wasser und

(e) gegebenenfalls 1 bis 10 Gew.-% weitere, in derartigen Zusammensetzungen übliche Wirkstoffe und/oder Hilfsstoffe.

**2.** Zusammensetzungen nach Anspruch 1, enthaltend einen oder mehrere Fettsäurealkylester der allgemeinen Formel (I), in der $R^1$ für einen geradkettigen Alkylrest, Alkenylrest oder Alkadienylrest mit 11 bis 17 C-Atomen, bevorzugt für einen geradkettigen Alkenylrest oder Alkadienylrest mit 11 bis 17 C-Atomen, steht.

**3.** Zusammensetzungen nach Ansprüchen 1 und 2, enthaltend Mischungen von Fettsäurealkylestern der allgemeinen Formel (I), in der $R^1$ für einen Alkylrest, Alkenylrest oder Alkadienylrest mit 11 bis 17 C-Atomen steht, auf der Basis von Gemischen natürlicher Fettsäuren.

4. Zusammensetzungen nach Anspruch 1, enthaltend einen oder mehrere Fettsäurealkylester der allgemeinen Formel (I), in der $R^2$ für einen verzweigten Alkylrest mit 3 bis 8 C-Atomen steht.

5. Zusammensetzungen nach Ansprüchen 1 bis 4, enthaltend einen oder mehrere Fettsäurealkylester der allgemeinen Formel (I), der bzw. die einen Stockpunkt von -15 °C oder darunter aufweist/aufweisen.

6. Zusammensetzungen nach Ansprüchen 1 bis 5, enthaltend einen oder mehrere mit quartären Ammoniumverbindungen beladene Bentonite.

7. Zusammensetzungen nach Ansprüchen 1 bis 6, enthaltend als Emulgatorsystem eine Kombination aus Polyaminen und Fettsäuren oder deren Calciumsalzen.

8. Zusammensetzungen nach Ansprüchen 1 bis 7, dadurch gekennzeichnet, daß sie zur Anwendung mit Nasser oder Elektrolytlösung in einer Menge verdünnt werden, daß der Gehalt der Komponenten (a) bis (c) im Bereich von 70 bis 90 Gew.-%, bezogen auf die Summe aller Komponenten, liegt.

9. Zusammensetzung nach Ansprüchen 1 bis 8, dadurch gekennzeichnet, daß sie zur Anwendung mit Beschwerungsmitteln, insbesondere mit Baryt oder Calciumcarbonat, auf das erforderliche spezifische Gewicht eingestellt werden.

## Claims

1. Mineral-oil-free compositions based on fatty acid esters, thickeners, emulsifiers and water for freeing stuck drill pipes, characterized in that they contain the following components:
   (a) 80 to 95% by weight of at least one fatty acid alkyl ester corresponding to general formula (I)

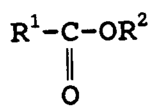

(I)

   in which
   $R^1$ is a linear $C_{7-23}$ alkyl, alkenyl or alkadienyl radical and
   $R^2$ is a linear or branched $C_{1-8}$ alkyl radical,
   (b) 0.5 to 5.0% by weight of at least one organophilic bentonite swellable in oleophilic systems as thickener,
   (c) 1 to 10% by weight of an emulsifier system consisting of an emulsifier component and a co-emulsifier component, the emulsifier component being at least one compound from the group consisting of polyamines, aminoamides, low-alkoxylated alkyl phenols and imidazolines and the co-emulsifier component being at least one compound from the group consisting of fatty acids, calcium salts thereof, sulfonic acids, alkyl or alkylbenzene derivatives thereof, calcium salts thereof and lecithin,
   (d) 1 to 5% by weight water and
   (e) optionally 1 to 10% by weight of other active components and/or auxiliaries of the type normally used in such compositions.

2. Compositions as claimed in claim 1, containing one or more fatty acid alkyl esters of general formula (I), in which $R^1$ is a linear $C_{11-17}$ alkyl, alkenyl or alkadienyl radical, preferably a linear $C_{11-17}$ alkenyl or alkadienyl radical.

3. Compositions as claimed in claims 1 and 2, containing mixtures of fatty acid alkyl esters of general formula (I), in which $R^1$ is a $C_{11-17}$ alkyl, alkenyl or alkadienyl radical, based on mixtures of natural fatty acids.

4. Compositions as claimed in claim 1 containing one or more fatty acid alkyl esters of general formula (I) in which $R^2$ is a branched $C_{3-8}$ alkyl radical.

5. Compositions as claimed in claims 1 to 4 containing one or more fatty acid alkyl esters of general formula (I) which has/have a pour point of $-15\,^{\circ}C$ or lower.

6. Compositions as claimed in claims 1 to 5 containing one or more bentonites charged with quaternary ammonium compounds.

7. Compositions as claimed in claims 1 to 6, containing a combination of polyamines and fatty acids or calcium salts thereof as the emulsifier system.

8. Compositions as claimed in claims 1 to 7, characterized in that, for use, they are diluted with water or electrolyte solution in such a quantity that the content of components (a) to (c) is from 70 to 90% by weight, based on the sum of all the components.

9. A composition as claimed in claims 1 to 8, characterized in that, for use, it may be adjusted to the necessary specific gravity with weighting agents, more particularly baryta or calcium carbonate.

**Revendications**

1. Compositions exemptes d'huile minérale, pour le déblocage de tiges de forage, à base d'esters d'acides gras, d'épaississants, d'émulsifiants et d'eau, caractérisées en ce qu'elles contiennent les composants suivants :

   (a) de 80 à 95 % en poids d'au moins un ester alkylique d'acide gras de formule générale (I)

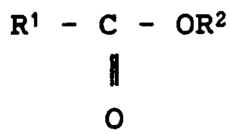

(I)

   dans laquelle

   $R^1$ représente un radical alkyle, alcényle ou alkadiényle à chaîne droite ayant de 7 à 23 atomes de carbone, et

   $R^2$ représente un radical alkyle à chaîne droite ou ramifiée ayant de 1 à 8 atomes de carbone,

   (b) de 0,5 à 5,0 % en poids d'au moins une bentonite organophile, susceptible de gonfler dans des systèmes lipophiles, en tant qu'épaississant,

   (c) de 1 à 10 % en poids d'un système émulsifiant constitué d'un composant émulsifiant et d'un composant co-émulsifiant, au moins un composé choisi parmi des polyamines, aminoamides, alkylphénols alcoxylés inférieurs et imidazolines, en tant que composant émulsifiant, et au moins un composé choisi parmi des acides gras, leurs sels de calcium, des acides sulfoniques, leurs dérivés alkylés ou d'alkylbenzène, leurs sels de calcium et la lécithine, en tant que composant co-émulsifiant, étant utilisés,

   (d) de 1 à 5 % en poids d'eau et

   (e) éventuellement de 1 à 10 % en poids d'autres substances actives et/ou adjuvants usuels dans de telles compositions.

2. Compositions selon la revendication 1, contenant un ou plusieurs esters alkyliques d'acides gras de formule générale (I), dans laquelle $R^1$ représente un radical alkyle, alcényle ou alkadiényle à chaîne droite ayant de 11 à 17 atomes de carbone, de préférence un radical alcényle ou alkadiényle à chaîne droite ayant de 11 à 17 atomes de carbone.

3. Compositions selon les revendications 1 et 2, contenant des mélanges d'esters alkyliques d'acides gras de formule générale (I), dans laquelle $R^1$ représente un radical alkyle, alcényle ou alkadiényle ayant de 11 à 17 atomes de carbone, à base de mélanges d'acides gras naturels.

4. Compositions selon la revendication 1, contenant un ou plusieurs esters alkyliques d'acides gras de formule générale (I), dans laquelle $R^2$ représente un radical alkyle ramifié ayant de 3 à 8 atomes de carbone.

**5.** Compositions selon les revendications 1 à 4, contenant un ou plusieurs esters alkyliques d'acides gras de formule générale (I), qui présente(nt) un point de solidification de −15 °C ou endessous.

**6.** Compositions selon les revendications 1 à 5, contenant des bentonites chargées de composés ammonium quaternaire.

**7.** Compositions selon les revendications 1 à 6, contenant comme système émulsifiant une combinaison de polyamines et d'acides gras ou de leurs sels.

**8.** Compositions selon les revendications 1 à 7, caractérisées en ce que, pour l'utilisation, elles sont diluées avec de l'eau ou une solution d'électrolyte, en une quantité telle que la teneur en composants (a) à (c) se situe dans la plage allant de 70 à 90 % en poids, par rapport à la somme de tous les composants.

**9.** Compositions selon les revendications 1 à 8, caractérisées en ce que, pour l'utilisation, elles sont ajustées à la densité requise, à l'aide d'alourdissants, en particulier à l'aide de baryte ou de carbonate de calcium.